Europäisches Patentamt

European Patent Office

Office européen des brevets

(11) Veröffentlichungsnummer: **0 328 956**

**A1**

# EUROPÄISCHE PATENTANMELDUNG

(21) Anmeldenummer: 89101848.3

(22) Anmeldetag: 03.02.89

(51) Int. Cl.4: **C08K 3/26 , C08L 25/02 , C08L 23/02 , //(C08L25/02, 23:02,53:02),(C08L23/02,25:02, 53:02)**

(30) Priorität: 13.02.88 DE 3804544

(43) Veröffentlichungstag der Anmeldung:
23.08.89 Patentblatt 89/34

(84) Benannte Vertragsstaaten:
BE DE FR GB IT

(71) Anmelder: BASF Aktiengesellschaft
Carl-Bosch-Strasse 38
D-6700 Ludwigshafen(DE)

(72) Erfinder: Hoenl, Hans, Dr.
Hauptstrasse 69a
D-6719 Obersuelzen(DE)
Erfinder: Mueller, Wolfgang, F., Dr.
Im Biengarten 45
D-6730 Neustadt(DE)
Erfinder: Jenne, Helmut, Dr.
Grosser Moench 6
D-6905 Schriesheim(DE)
Erfinder: Moedersheim, Norbert
Taunusstrasse 3
D-6710 Frankenthal(DE)

(54) **Thermoplastische Formmasse, Verwendung derselben zur Herstellung von Formteilen und Formteile daraus.**

(57) Thermoplastische Formmasse, enthaltend, jeweils bezogen auf die Formmasse aus A + B + C,

    A       30 bis 60 Gew.% mindestens eines Styrol und/oder substituiertes Styrol enthaltenden Polymerisates

    B     30 bis 60 Gew.% mindestens eines Homo- oder Copolymerisates eines $\alpha$-Olefinmonomeren, das seinerseits 5 bis 60 Gew.%, bezogen auf B, eines Füllmittels enthält.

    C      2 bis 20 Gew.% mindestens eines Styrol und Butadien oder Isopren enthaltenden Blockcopolymerisates, das gegebenenfalls selektiv hydriert sein kann.

Charakteristisch ist, daß das Füllmittel Kreide ist.
Die Formmasse wird zur Herstellung von Formteilen verwendet.

EP 0 328 956 A1

## Thermoplastische Formmasse, Verwendung derselben zur Herstellung von Formteilen und Formteile daraus

Die Erfindung betrifft eine thermoplastische Formmasse auf der Grundlage einer Mischung aus 30 bis 60 Gew.-% eines Polymerisats A von Styrol und/oder substituiertem Styrol, 30 bis 60 Gew.-% eines Homo- oder Copolymerisats B von Ethylen und/oder Propylen, 2 bis 20 Gew.-% eines Blockcopolymerisats C von Styrol und Butadien oder Isopren und 1 bis 35 Gew.-% eines Füllmittels D, jeweils bezogen auf die Formmasse aus A + B + C.

Zum Stand der Technik werden genannt:

(1) EP-A-0 042 153
(2) EP-A-0 0 04 685
(3) DE-A-20 61 361
(4) DE-A-36 20 008
(5) DE-A-37 15 036.

Formmassen aus Polystyrol und Polyolefin finden vor allem im Verpackungssektor Anwendung. Da Polystyrol und Polyolefine unverträglich sind, werden als Mischungsvermittler Styrol-Isopren-Zweiblock-Copolymerisate (vgl. (1)) oder hydrierte Styrol-Butadien-Styrol-Dreiblock-Copolymerisate (vgl. (2)) als mischungsvermittelnde Zusätze verwendet. Ferner ist aus (3) die Verwendung hydrierter Styrol-Butadien-Zweiblock-Copolymerisate als Mischungsvermittler bekannt. Nach (4) wird für diesen Zweck ein spezielles Blockcopolymerisat beschrieben, das einen Gesamtstyrolgehalt im Bereich von 40 bis 60 Gew.% aufweist. Nach (5) wird die Verarbeitungsschwindung solcher Mischungen vermindert, indem die Polyolefin-Phase mit Talkum versetzt wird.

Es ist ferner bekannt, Polymerformmassen, insbesondere Polyethylen oder Polypropylen, Calciumcarbonat bzw. Kreide als Füllstoff zuzusetzen. Die Verarbeitbarkeit derart gefüllter Polyolefine ist jedoch insbesondere beim Thermoformen, einer für PS, PVC und ABS gängigen Formgebungsmethode schwierig.

Es bestand daher die Aufgabe, besonders für Lebensmittelverpackungen geeignete Formmassen zu finden, deren Verarbeitbarkeit beim Tiefziehen besser sein sollte als die von Polypropylen.

Diese Aufgabe wird gelöst durch eine Formmasse der eingangs angegebenen Art, die als Füllmittel feinteiliges Calciumcarbonat enthält.

Weiter vorzugsweise enthält die Formmasse Kreide in der Form, wie sie beim Vermischen von Polymeren A, B und C unter Aufschmelzen erhalten wird, wenn als Polyolefin B ein bereits Kreide enthaltendes Polyolefin verwendet wird. Die Mischung enthält in diesem Fall z.B.

A 30 bis 60 Gew.%, vorzugsweise 35 bis 55 Gew.%,
B 30 bis 60 Gew.%, vorzugsweise 35 bis 55 Gew.% (einschließlich Kreide),
C 2 bis 20 Gew.%, vorzugsweise 4 bis 14 Gew.%.

Bezogen auf 100 Gewichtsteile der Mischung aus A, B (einschließlich D) und C können noch 0,05 bis 25 Gewichtsteile, insbesondere 0,1 bis 10 Gewichtsteile weiterer üblicher Zusatz- oder Hilfsstoffe zugegen sein.

Als Komponente A der erfindungsgemäßen Formmasse kommen Homopolymerisate von Styrol oder Copolymerisate mit einem der eng verwandten, insbesondere methylsubstituierten Styrole in Frage, in denen ein Methylrest als Substituent am aromatischen Ring oder an der Seitenkette vorhanden ist. Hier ist vor allem p-Methylstyrol zu erwähnen. Diese Copolymerisate können aus Styrol bzw. substituiertem Styrol in bekannter Weise hergestellt werden. Als Styrolpolymerisate kommen ferner schlagzähe Pfropfmischpolymerisate in Frage, die durch Polymerisation von Styrol oder substituiertem Styrol in Gegenwart eines Kautschuks, z.B. eines Butadienpolymerisates oder kautschukartigen Styrol/Butadien-Polymerisats, hergestellt werden. Der Polybutadiengehalt kann 3 bis 20 Gew.%, vorzugsweise 5 bis 12 Gew.%, bezogen auf A, betragen. Der mit Styrol gepfropfte Kautschuk (Weichphase) liegt dabei fein dispergiert in einer als Hartmatrix bezeichneten Polystyrolphase vor. Die Herstellung derartiger schlagfester Polystyrole ist bekannt. Polystyrole und Polymerisate substituierter Styrole sind, ebenso wie die schlagzähen Polystyrole, im Handel erhältlich. Die Viskositätszahl der Komponente A soll im Bereich von 60 bis 120 ml/g liegen (0,5 %ige Lösung in Toluol bei 23°C).

Als Homo- oder Copolymerisate B von $\alpha$-Olefinmonomeren kommen die des Ethylens und Propylens in Frage. Es seien genannt Polyethylen von hoher Dichte (Bereich 0,94 bis 0,97 g/cm$^3$) mit einem Schmelzflußindex (gemessen nach BS 2782, Teile 105C) von 0,001 bis 0,2 dg/Minute oder Copolymerisate von Ethylen und geringen Mengen (ca. 10 %) Propylen. Die Herstellung derartiger Produkte ist bekannt.

Bevorzugt wird ausschließlich Polypropylen verwendet, das unter Verwendung von Natta-Katalysatoren hergestellt wurde und einen Schmelzindex im Bereich von 0,1 bis 90,0 g/10 Min. (MFI 190/5) aufweist. Besonders bevorzugt sind dabei solche Produkte, deren ataktischer Anteil zwischen 0,1 und 20 Gew.% liegt (gemessen als xylollöslicher Anteil unter Standardbedingungen).

Bevorzugt wird die Komponente B in Form einer Mischung des Polymeren mit dem Füllstoff D eingesetzt.

Der Füllstoff der Komponente B ist in diesem Fall in einer Menge von 5 bis 60 Gew.%, vorzugsweise von 20 bis 5 Gew.%, bezogen auf B, im Polymeren enthalten.

Als Füllstoff B wird Calciumcarbonat, insbesondere in Form von Kreide verwendet. Unter Kreide im Sinne der vorliegenden Erfindung soll Kreide verstanden werden, deren mittlere Korngröße 0,1 bis 20 μm, vorzugsweise 0,5 bis 10 μm beträgt; es kann sich um künstlich hergestellte Kreide oder um solche aus natürlichen Vorkommen handeln.

Die erfindungsgemäß verwendete Kreide kann oberflächenbehandelt sein. In Frage kommen hier die üblichen Haftvermittler auf Silan-, Chrom- oder Titanbasis; aber auch Beschichtungen mit verträglich machenden Verbindungen wie Stearaten, Wachsen oder Polymeren, die zur Filmbildung geeignet sind, sind möglich. Vorzugsweise wird jedoch eine unbehandelte Kreide verwendet.

Solche Kunststoff-Füllstoff-Mischungen lassen sich auf übliche Art und Weise durch gemeinsames Extrudieren, Kneten oder Verwalzen der Ausgangskomponenten bei höherer Temperatur herstellen.

Als Komponente C wird ein Styrol und Butadien oder Isopren enthaltendes Blockcopolymer verwendet. Das Blockcopolymere kann nach der Herstellung noch selektiv hydriert sein. Solche Blockcopolymere sind im Handel erhältlich.

Genannt seien z.B. lineare Blockcopolymerisate mit scharfem oder verschmiertem Übergang, wobei zwei oder mehr Blöcke von Styrol und/oder Dien vorhanden sein können. Außerdem geeignet sind die sternförmig verzweigten Blockcopolymerisate mit mono- oder polymodalem Aufbau, wie sie in der DE-A-26 60 068 beschrieben werden. Diese Blockcopolymerisate sind in der Regel aus ca. 20 bis 95 Gew.% Styrol und 80 bis 5 Gew.% Dien auf gebaut und umfassen somit sowohl thermoplastische starre Massen als auch thermoplaste Elastomere (vgl. auch DE-A-25 50 226, DE-A-25 50 227 und DE-A-19 59 922).

Vorzugsweise ist die Komponente C ein lineares, aus Styrol und Butadien bestehendes Blockcopolymerisat, das in bekannter Weise selektiv in der Weise hydriert worden ist, daß lediglich die vom Monomerenbaustein Butadien herrührenden Doppelverbindungen zu mehr als 90 %, insbesondere mehr als 97 % abgesättigt werden. Verfahren zur Hydrierung sind z.B. in DE-A-27 48 884 beschrieben.

Besonders günstig für den Aufbau eines hydrierten Blockcopolymerisats ist es, wenn der Gesamtstyrolgehalt im Bereich von 40 bis 60 Gew.%, vorzugsweise 50 bis 55 Gew.%, bezogen auf C liegt, 5 bis 25 Gew.% des Blockcopolymerisats C als Blockpolystyrol vorliegen und der Rest des Styrols in 60 bis 40 Gew.%, vorzugsweise 50 bis 45 Gew.% Einheiten, die vom Butadien herstammen, statistisch eingebaut vorliegt, wobei des Blockcopolymerisat C ein mittleres Molekulargewicht (Gewichtsmittel) von 50.000 bis 200.000, vorzugsweiswe 75.000 bis 150.000 aufweist.

Die Herstellung derartiger Blockcopolymerisate erfolgt durch anionische Polymerisation von Mischungen aus Butadien und Styrol in Gegenwart von Li-alkylinitiatoren und von THF. Sie können z.B. nach dem in Beispiel 2 der DE-A-31 06 959 beschriebenen Verfahren hergestellt werden, wobei insbesondere adiabatisch in einer Verfahrensstufe gearbeitet wird.

Die erfindungsgemäße Formmasse kann weiterhin in untergeordneter Menge (Komponente E) Zusatzstoffe enthalten, die für die Komponenten A, B und C typisch und gebräuchlich sind. Als solche Zusatzstoffe seien beispielsweise genannt: Andere Füllstoffe als Kreide, Farbstoffe, Pigmente, Antistatika, Antioxidantien, auch Flammschutzmittel und insbesondere die Schmiermittel, die für die Weiterverarbeitung der Formmasse, z.B. bei der Herstellung von Formkörpern bzw. Formteilen erforderlich sind.

Die Herstellung der Formmasse erfolgt durch Mischen der Bestandteile unter Aufschmelzen. Vorzugsweise geschieht das Mischen durch gemeinsames Extrudieren, Kneten oder Verwalzen der Komponenten bei höherer Temperatur in einem Ein- oder Zweiwellenextruder. Die erfindungsgemäße Formmasse kann mit den üblichen Verfahren der Thermoplastverarbeitung verarbeitet werden, also z.B. durch Extrudieren, Spritzgießen, Kalandrieren, Hohlkörperblasen, Pressen oder Sintern; besonders bevorzugt werden aus den nach dem erfindungsgemäßen Verfahren hergestellten Formmassen Folien durch Extrusion nach dem Thermoformverfahren hergestellt.

Die nachstehend verwendeten Parameter wurden wie folgt bestimmt:

1. Lochkerbschlagzähigkeit, LKSZ, nach DIN 53 753 in [kJ/m²]
2. Reißdehnung, RD, nach DIN 53 455 in [%]
3. Vicat-Erweichungstemperatur, VST/B, nach DIN 53 460 in [°C]

3

4. Verarbeitungsschwindung, VS, nach DIN 16 901 in [%]

Für die beispielhafte Herstellung von erfindungsgemäßen Formmassen und von Vergleichsmassen wurden die nachfolgend beschriebenen Rohstoffe verwendet:

Komponente A

A.    Ein schlagfestes Polystyrol mit einem Polybutadiengehalt von 7,9 Gew.%; mittlere Teilchengröße der Weichphase: 2,7 $\mu$m (Mittelwert: 50 Vol.% der als Weichphase vorliegenden Kautschukpartikel liegen oberhalb dieses Wertes und 50 Vol.% unterhalb dieses Wertes), enthaltend 0,12 Gew.% eines sterisch gehinderten Phenols als Antioxydans und 2,3 Gew.% Weißöl als Schmiermittel; VZ der Hartmatrix: 70 ml/g.

Komponente B

$B_1$    Eine Mischung aus 60 Gew.% eines nach dem Gasphasenverfahren hergestellten Polypropylens (atakt. Anteil: 3 Gew.%, MFI (190/5): 22 g/10 min.) und 40 Gew.% Kreide. Die Kreide weist folgende Merkmale der Korngrößenverteilung auf:

35 Gew.% unter 2 $\mu$m
30 Gew.% von 5 bis 10 $\mu$m
mittlere Korngröße: 3 $\mu$m
$B_2$    Eine Mischung aus 60 Gew.% des wie vorstehend erhaltenen Polypropylens und 40 Gew.% Talkum (zu Vergleichszwecken).
Das Talkum hatte folgende Zusammensetzung:
61 % $SiO_2$, 30 % MgO, 1 % $Fe_2O_3$, 1 % $Al_2O_3$, 0,8 % CaO; es wies 5 bis 5 % Glühverlust auf.
Die Korngrößenverteilung des Talkums war::
96 % unter 40 $\mu$m
91 % unter 30 $\mu$m
75 % unter 20 $\mu$m
41 % unter 10 $\mu$m
mittlere Korngröße: 12 $\mu$m

Komponente C

Ein handelsübliches selektiv hydriertes Styrol-Butadien-Blockcopolymerisat mit einem Gesamtstyrolgehalt von 53 Gew.%, Rest 47 Gew.% Butadien. Diese 53 Gew.% Styrol sind aufgeteilt in 10 Gew.% in Form von Blockpolystyrol und in 43 Gew.%, die im Butadien statistisch verteilt sind (erhältlich z.B. als ®Glissoviskal SG).

Die Beispiele 1 bis 4 und Vergleichsversuche I bis VIII hergestellten Mischungen sind nachstehend in Form einer Tabeller angeortdnet; die angegebenen Zahlen sind, soweit es Mengenangaben sind, Gewichtsteile.

Die in der Tabelle angegebenen Gewichtsteile der Komponenten A, $B_n$ und C wurden in trockener Form mit zusätzlich jeweils 0,1 Teilen eines sterisch gehinderten Phenols als Antioxidans (®Irganox 1076) gemischt und auf einem Doppelschneckenextruder extrudiert. Temperatur des Extruders: 220°C. Aus dem getrockneten Granulat wurden die Formkörper für die Eigenschaftsprüfung durch Pressen (190°C) hergestellt.

Den Werten der Tabelle ist zu entnehmen, daß die Sprödigkeit der mit Kreide hergestellten Formmassen geringer ist als die der mit Talkum hergestellten Formmassen (Beispiele 1 bis 4 vs. Vergleichsversuche I bis VI). In beiden Fällen ist die Verarbeitungsschwindung gleich niedrig.

Tabelle

|  | Beispiele | | | | Vergleichsversuche | | | | | |
|---|---|---|---|---|---|---|---|---|---|---|
|  | 1 | 2 | 3 | 4 | I | II | III | IV | V | VI |
| A | 58,8 | 58,2 | 57,6 | 57,0 | 60,0 | 52,4 | 58,8 | 58,2 | 57,6 | 57,0 |
| $B_1$ | 39,2 | 38,8 | 38,4 | 38,0 | 0 | 0 | 0 | 0 | 0 | 0 |
| $B_2$ | 0 | 0 | 0 | 0 | 40,0 | 32,6 | 39,2 | 38,8 | 38,4 | 38,0 |
| C | 2 | 3 | 4 | 5 | 0 | 1 | 2 | 3 | 4 | 5 |
| LKSZ | 7,9 | 6,3 | 6,7 | 7,7 | 2,4 | 2,8 | 3,2 | 3,3 | 3,5 | 4,0 |
| RD | 3,7 | 5,1 | 5,0 | 7,2 | 1,2 | 1,7 | 2,4 | 2,9 | 3,4 | 3,4 |
| VST/B | 80 | 78 | 75 | 75 | 86 | 82 | 78 | 78 | 74 | 74 |
| VS | 0,6 | 0,6 | 0,6 | 0,6 | 0,6 | 0,6 | 0,6 | 0,6 | 0,6 | 0,6 |

**Ansprüche**

1. Thermoplastische Formmasse, enthaltend 30 bis 60 Gew.% eines Polymerisats A von Styrol und/oder substituiertem Styrol, 30 bis 60 Gew.% eines Homo- oder Copolymerisats B von Ethylen oder Propylen, 2 bis 20 Gew.% Blockcopolymerisats C von Styrol und Butadien oder Isopren und 1 bis 35 Gew.% eines Füllmittels D, wobei die Summe aus A bis D 100 ergibt, dadurch gekennzeichnet, daß sie als Füllmittel feinteiliges Calciumcarbonat enthält.

2. Formmasse nach Anspruch 1, erhältlich dadurch, daß man 30 bis 60 Gew.% des Polymerisats A, 30 bis 60 Gew.% des Homo- oder Copolymerisats B, das 5 bis 60 Gew.%, bezogen auf B, an Kreide enthält und 2 bis 20 Gew.% des Blockcopolymerisats C in an sich bekannter Weise unter Aufschmelzen mischt.

3. Formmasse nach Anspruch 1, enthaltend, bezogen auf 100 Teile A bis D, 0,05 bis 25 Gew.-Teile weiterer üblicher Zusatzstoffe.

4. Formmasse nach Anspruch 1, dadurch gekennzeichnet, daß sie ein lineares Styrol und Butadien enthaltendes Blockcopolymerisat C mit einem mittleren Molekulargewicht (Gewichtsmittel) von 50.000 bis 200.000 enthält, dessen Styrolgehalt 40 bis 60 Gew.%, bezogen auf C beträgt, wobei 5 bis 25 Gew.% als Blockpolystyrol vorliegen und der Rest des Styrols in 60 bis 40 Gew.% Butadien statistisch eingebaut vorliegt.

5. Formmasse nach Anspruch 1, dadurch gekennzeichnet, daß sie ein selektiv hydriertes Blockcopolymerisat C enthält.

6. Formmasse nach Anspruch 1, dadurch gekennzeichnet, daß der Füllstoff Kreide ist und eine mittlere Korngröße von 0,1 bis 20 μm aufweist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | DE-A-2 061 361 (BASF) <br> * Anspruch * <br> --- | 1 | C 08 K 3/26 <br> C 08 L 25/02 <br> C 08 L 23/02 // <br> (C 08 L 25/02 <br> C 08 L 23:02 <br> C 08 L 53:02 ) <br> (C 08 L 23/02 <br> C 08 L 25:02 <br> C 08 L 53:02 ) |
| A,D | EP-A-0 042 153 (SWEETHEART PLASTICS) <br> * Ansprüche * <br> --- | 1 | |
| A,D | EP-A-0 250 970 (BASF) <br> * Ansprüche; Spalte 4, Zeilen 1-12 * <br> --- | 1 | |
| A | CHEMICAL ABSTRACTS, Band 94, Nr. 6, 9. Februar 1981, Seite 39, Nr. 31613x, Columbus, Ohio, US; & JP-A-55 116 743 (ASAHI-DOW Ltd) 08-09-1980 <br> --- | 1-6 | |
| A | WPIL, FILE SUPPLIER, Nr. 84-033148, Derwent Publications LTD, London, GB; & JP-A-58 222 133 (MITSUBISHI PETROCH K.K.) 23-12-1983 <br> ----- | 1-6 | |

RECHERCHIERTE SACHGEBIETE (Int. Cl.4)

C 08 K
C 08 L

Der vorliegende Recherchenbericht wurde für alle Patentansprüche erstellt

| Recherchenort | Abschlußdatum der Recherche | Prüfer |
|---|---|---|
| DEN HAAG | 19-05-1989 | HOFFMANN K.W. |

EPO FORM 1503 03.82 (P0403)